# FASCICULE DE BREVET EUROPEEN

(11) **EP 2 231 475 B1**
(45) Date de publication et mention de la délivrance du brevet: **18.03.2015**
(21) Numéro de dépôt: 09715269.8
(22) Date de dépôt: 09.01.2009
(51) Int. Cl.: B64D 29/06, F02K 1/72

(54) **STRUCTURE 12 HEURES POUR INVERSEUR DE POUSSÉE NOTAMMENT À GRILLES**
12 UHR STRUKTUR FÜR EINEN SCHUBUMKEHRER INSBESONDERE MIT GITTERN
TWELVE-HOUR STRUCTURE FOR THRUST REVERSER, IN PARTICULAR WITH GRIDS

(30) Priorité: 18.01.2008 FR 0800264
(43) Date de publication de la demande: 29.09.2010
(73) Titulaire: Aircelle, 76700 Gonfreville L'Orcher (FR)
(72) Inventeur: VACHE, Jean-Bernard, 76600 Le Havre (FR); VALLEROY, Laurent, 76600 Le Havre (FR)
(74) Mandataire: Gaillarde, Frédéric F. Ch.
(86) Numéro de dépôt international: PCT/FR2009/000023
(87) Numéro de publication internationale: WO 2009/106763

(56) Documents cités:
- EP-A- 1 457 659
- WO-A-2007/147193
- US-A- 5 083 426

## Description

La présente invention se rapporte à une structure 12 heures pour inverseur de poussée notamment à grilles.

Classiquement, un inverseur de poussée à grilles comprend deux demi-capots montés chacun coulissant sur une demi-poutre montée pivotante sur un mât de support de nacelle.

Le mouvement de coulissement de chaque demi-capot sur sa demi-poutre associée permet de faire passer l'inverseur de poussée d'une configuration de jet direct à une configuration de jet inversé, et inversement.

Le mouvement de rotation de chaque demi-poutre sur le mât de support de nacelle permet de faire pivoter chaque demi-capot par rapport à ce mât pour les opérations de maintenance.

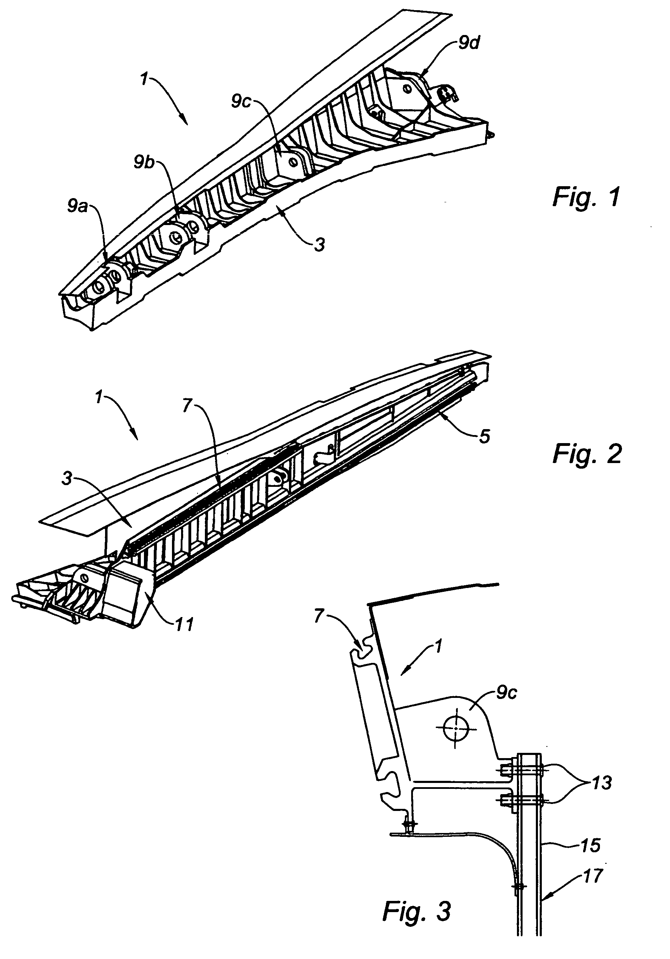

Comme cela est représenté sur les figures 1 et 2 ci-annexées, chaque demi-poutre 1 est formée dans un alliage métallique nervuré 3, et comprend typiquement, sur sa face extérieure, des rails primaire 5 et secondaire 7 aptes à permettre le mouvement du demi-capot (non représenté) associé, et une pluralité de chapes de charnières 9a, 9b, 9c, 9d aptes à permettre l'articulation de la demi-poutre 1 sur le mât de nacelle associé.

Un réceptacle 11, monté sur la partie amont (par rapport au sens de l'écoulement d'air dans la nacelle) de la demi-poutre 1, permet la fixation d'un cadre avant destiné à supporter les grilles de l'inverseur de poussée (cadre et grilles non représentés).

Comme cela est visible sur la figure 3, la demi-poutre 1 est rapportée par rivetage 13 sur la partie supérieure 15 d'un panneau de demi-structure interne fixe 17, formé généralement en matériau composite, et définissant, avec le capot d'inverseur de poussée associé, la veine d'air froid 18.

L'ensemble formé par la demi-poutre 1, ses rails 5, 7 et ses chapes de charnières 9a à 9d, est souvent désigné par « structure 12 heures », étant donnée sa position en haut du cercle défini par une section de nacelle, et par analogie avec le cadran d'une horloge.

On connaît de l'état de la technique la demande internationale WO2007/147193 se rapportant à l'ensemble précité, ledit ensemble étant rapporté en partie supérieure d'un panneau de demi-structure interne fixe.

La présente invention a notamment pour but de fournir une structure 12 heures allégée par rapport à celles de l'état de la technique.

On atteint ce but de l'invention avec une nacelle d'aéronef comprenant :
- une structure 12 heures pour inverseur de poussée, comprenant :
   - au moins une demi-poutre (1) formée en partie en matériau Il composite et supportant un demi-capot d'inverseur de poussée.
   - une pluralité de chapes de charnières pour le montage à rotation de cette demi-poutre sur un mât de support de nacelle, et
- au moins un panneau de demi-structure interne fixe,
remarquable en ce que ladite demi-poutre est intégrée à la partie supérieure du panneau de la demi-structure interne fixe. Grâce à ces caractéristiques, il n'est plus nécessaire de riveter la demi-poutre sur le panneau de demi-structure interne fixe (cette structure interne étant fréquemment désignée par « IFS », c'est-à-dire « Internal Fixed Structure »), ce qui permet de gagner du temps de montage/démontage.

L'utilisation de matériau composite pour la fabrication de cette demi-poutre permet d'en alléger considérablement le poids.

Suivant d'autres caractéristiques optionnelles de la présente invention :
- ladite demi-poutre comprend en outre au moins un rail pour montage à coulissement dudit demi-capot : un tel rail est adapté au cas d'un inverseur de poussée à grilles ;
- ladite demi-poutre comprend un noyau en mousse enveloppé dans la peau dudit panneau : cette variante permet d'obtenir la rigidité souhaitée pour la demi-poutre tout en ayant un faible poids ;
- ladite demi-poutre comprend un caisson en matériau composite enveloppé dans la peau dudit panneau : cette variante permet de gagner du poids par rapport au remplissage en mousse de la variante précédente ;
- lesdites chapes de charnières sont formées dans un alliage métallique ;
- ladite demi-poutre comprend un noyau comportant une partie en mousse et un tube en matériau composite, ce noyau étant enveloppé dans la peau dudit panneau : cette variante permet de gagner du pois par rapport à la première des variantes susmentionnées, tout en utilisant un tube composite standard, c'est-à-dire non conformé spécialement pour cette utilisation particulière ;
- ledit tube est formé en carbone forgé : ce matériau offre un excellent compromis résistance/poids ;
- lesdits rails et lesdites chapes de charnières prennent en sandwich ladite peau : cet agencement permet une bonne tenue tant des rails que des chapes de charnières ;
- lesdites chapes de charnières sont formées en carbone forgé : ces chapes, qui offrent une excellente résistance pour un faible poids, peuvent être placées dans les moules pour les variantes à caisson ouvert.

La présente invention se rapporte également à une nacelle pour moteur d'aéronef, remarquable en ce qu'elle comprend une structure 12 heures conforme à ce qui précède.

D'autres caractéristiques et avantages de la présente apparaîtront à la lumière de la description qui va suivre, et à l'examen des figures ci-annexées, dans lesquelles :
- les figures 1 et 2 sont des vues en perspective d'une structure 12 heures de l'état de la technique, évoquée dans le préambule de la présente description ;
- la figure 3 est une vue transversale de cette structure 12 heures, prise au droit de l'une des chapes de charnières de cette structure ;
- les figures 4 et 5 sont des vues en coupe transversale d'un mode de réalisation d'une structure 12 heures selon l'invention, respectivement en section courante et dans la zone où se trouve l'une des chapes de charnières ;
- les figures 6 et 7 sont des vues analogues aux figures 4 et 5 d'une variante du mode de réalisation selon l'invention ;
- la figure 8 indique de manière schématique l'ensemble des composants permettant de réaliser une structure 12 heures selon les figures 6 et 7;
- les figures 9 et 10 sont des vues analogues aux figures 4 et 5 d'une autre variante du mode de réalisation selon l'invention ;
- la figure 11 est une vue en coupe axiale du tube formant la structure 12 heures des figures 9 et 10, dans la zone de l'une des chapes de charnières de cette structure ;
- les figures 12 et 13 sont des vues analogues aux figures 4 et 5 d'un mode de réalisation non couvert par la présente invention ;
- la figure 14 est une vue analogue à la figure 8 de mode de réalisation non couvert ;
- les figures 15 et 16 sont des vues analogues aux figures 4 et 5 d'une variante de mode de réalisation non couvert ;
- la figure 17 indique de manière schématique la manière dont la variante des figures 15 et 16 peut être obtenue par un moulage ;
- la figure 18 est une vue analogue à la figure 4 d'une troisième variante du mode de réalisation non couvert ; et
- la figure 19 est une vue analogue à la figure 17 de l'opération de moulage de la structure de la figure 18.

Sur l'ensemble de ces figures, des références identiques ou analogues désignent des organes ou ensemble d'organes identiques ou analogues.

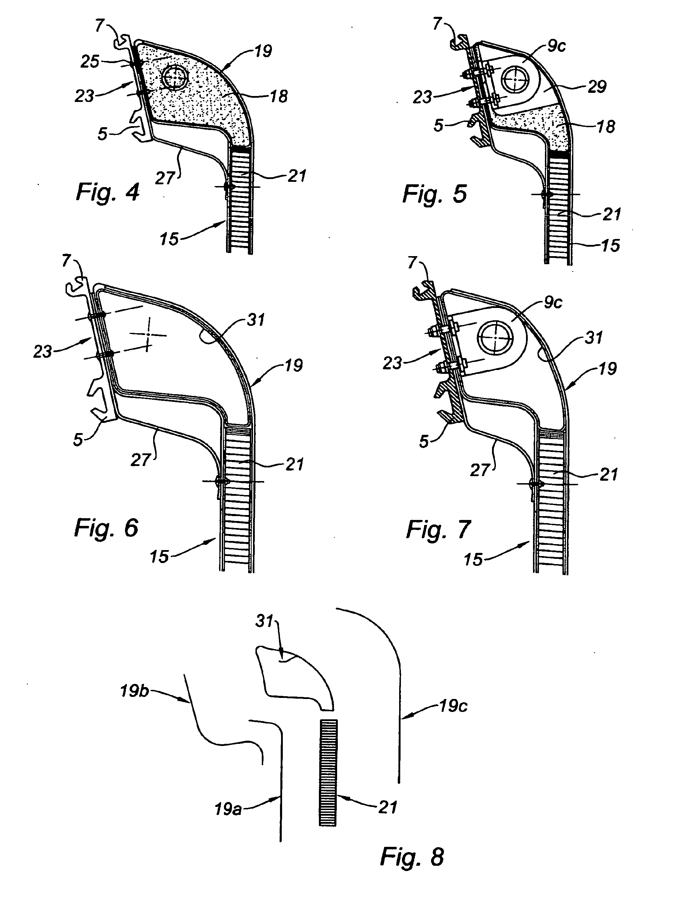

En se reportant à présent aux figures 4 et 5, on peut voir que, selon un mode de réalisation de la structure 12 heures de l'invention, la demi-poutre 1 est intégrée dans la partie supérieure 15 d'un panneau de demi-structure interne fixe 17.

Plus précisément, dans la variante représentée aux figures 4 et 5, la demi-poutre 1 comprend un noyau en mousse 18 enveloppé de la peau 19 disposée de part et d'autre de la structure en nid d'abeille 21 du panneau 15.

La mousse 18, qui peut être par exemple une mousse de ROHACELL 110 WF, la peau 19 et la structure en nid d'abeille 21 sont réalisées en une seule opération de co-cuisson.

Une plaque 23 intégrant les rails primaire 5 et secondaire 7, formée par exemple dans un alliage métallique, est fixée par rivetage 25 sur la peau 19.

De préférence, entre cette plaque 23 et cette peau 19 se trouve un profilé 27 définissant une forme aérodynamique appropriée pour l'écoulement d'air froid le long du panneau 15.

Comme cela est visible à la figure 5, dans les zones des charnières 9a à 9d, la peau 19 est interrompue et la mousse 18 comprend des logements 29 dans lesquels sont disposées les chapes de charnières (9c sur la figue 5).

Ces chapes de charnières sont boulonnées sur la plaque 23, prenant ainsi en sandwich d'une part le profilé aérodynamique 27, et d'autre part la peau 19.

Dans la variante représentée aux figures 6 et 7, le noyau en mousse 18 est remplacé par un caisson monolithique 31, formé en matériau composite.

Ce caisson est de préférence précuit, la peau 19 étant ensuite surmoulée sur ce caisson.

La figure 8 permet de voir que la variante représentée aux figures 6 et 7 et formée par l'assemblage d'une pluralité d'éléments simples : parties de peau 19a, 19b, 19c, structure en nid d'abeille 21 et caisson monolithique 31.

L'assemblage de l'ensemble de ces éléments simples est réalisé par co-cuisson complète.

La fixation de la plaque 23 et des chapes 9a à 9d est analogue à celle de la variante précédente.

On comprend que, de par le caractère creux du caisson monolithique 31, cette variante permet un gain de poids important par rapport à la variante précédente.

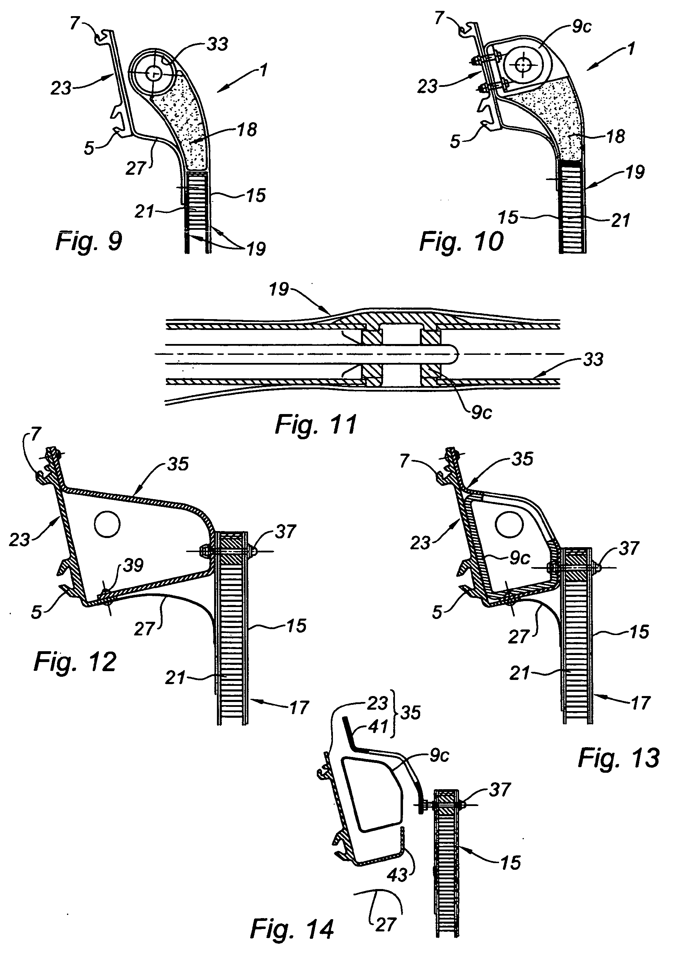

Dans la variante représentée aux figures 9 à 11, la peau 19 enveloppe un tube 33 en matériau composite, reliant entre elles les chapes de charnières 9a à 9d.

Ce tube et ces chapes peuvent être réalisés par exemple en carbone forgé, permettant d'obtenir un excellent compromis résistance/poids.

Dans la zone comprise entre la structure en nid d'abeille 21 et le tube 33, se trouve un noyau en mousse 18 analogue à celui de la variante des figures 4 et 5.

La plaque 23 supportant des rails 5 et 7 est reliée au panneau 15 par l'intermédiaire du profilé 27.

Dans les zones où se trouvent les chapes de charnières 9a à 9d, cette plaque 23 est en outre boulonnée sur ces chapes, comme cela est visible à la figure 10.

Cette variante est intéressante car elle permet l'utilisation de tubes en carbone forgé 33 de dimension standard autour desquels on maroufle la peau 19 : on s'affranchit de la sorte de la nécessité de concevoir une pièce sur mesure, ce qui permet de réduire le coût de fabrication.

On se rapporte à présent aux figures 12 à 14, sur lesquelles on a représenté un deuxième mode de réalisation de la structure 12 heures non couvert par la présente invention.

Dans la variante représentée sur ces trois figures, cette structure 12 heures comprend un caisson fermé 35 formé en matériau composite, l'une des faces de ce caisson étant définie par la plaque 23 supportant les rails primaire 5 et secondaire 7.

Cette plaque peut être formée dans un alliage métallique, ou bien en composite « extrudé ».

Contrairement au mode de réalisation précédent, le caisson 35 est rapporté par boulonnage 37 sur la partie supérieure 15 du panneau de demi-structure interne fixe 17.

Comme cela est visible sur les figures 12 et 13, le profilé 27 de forme aérodynamique reliant le caisson 35 au panneau 15 peut être pris par les rivets 39 reliant la plaque 23 au reste du caisson 35.

La figure 13 montre que les chapes de charnières 9a à 9d, qui peuvent être par exemple formées en carbone forgé, sont placées à l'intérieur du caisson 35, et fixées au panneau 15 par les rivets 37.

La figure 14 montre que cette variante peut être formée par l'assemblage d'éléments simples: plaque 23, demi-coque de caisson 41, chapes de charnières 9a à 9d et boulons de fixation 37.

Cette figure 14 montre également que la plaque 23 peut avantageusement comprendre un retour 43 destiné à être pris par les boulons 37, évitant ainsi d'avoir à recourir aux rivets 39.

Contrairement au mode de réalisation précédent, on comprend que ce mode de réalisation peut être rapporté sur une demi-structure interne fixe 17 standard, ne nécessitant ainsi aucune modification du panneau supérieur 15 de cette structure.

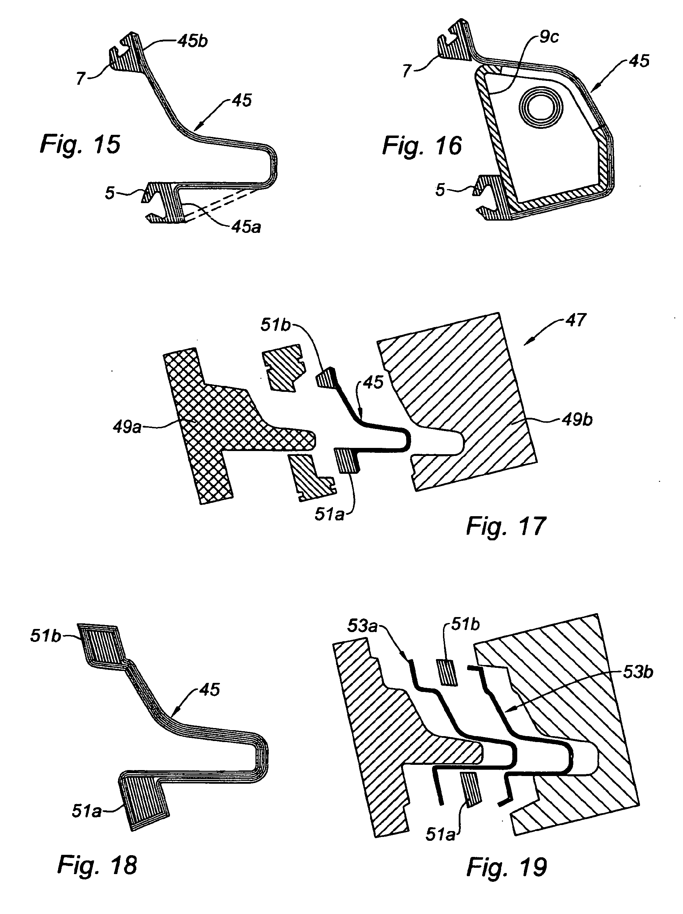

Dans la variante de ce mode de réalisation non couvert représentée aux figures 15 à 17, la demi-poutre 1 de la structure 12 heures selon l'invention comprend un caisson ouvert 45 formé par le drapage de plusieurs couches d'un matériau composite.

Aux extrémités libres 45a, 45b de ce caisson ouvert 45 se trouvent les rails 5 et 7, formés eux aussi de préférence par drapage de plusieurs couches successives de matériau composite.

A l'intérieur du caisson ouvert 45 se trouvent les chapes de charnières 9a à 9d, comme cela est représenté sur la figure 16.

Comme cela est visible à la figure 17, la structure 12 heures représentée sur les figures 15 et 16 peut être réalisée par moulage dans un moule 47 comprenant un noyau 49a et une matrice 49b.

Les ébauches 51 a, 51 b définissant les rails 5 et 7 sont placées sur le noyau 49a, et on vient draper les couches de matériau composite formant le caisson 45 sur ces ébauches 51 a, 51 b, et sur le noyau 49a.

On vient ensuite fermer la matrice 49b sur le noyau 49a, et l'on injecte de la résine dans l'interface entre cette matrice et ce noyau, permettant ainsi d'assembler entre eux les différents éléments formant la demi-poutre 1 (ce procédé de moulage est classiquement connu sous le nom de « RTM », c'est-à-dire « Resin Transfert moulding »).

Dans la variante représentée aux figures 18 et 19, on voit que l'on peu avantageusement former le caisson ouvert 45 à partir de deux sous-ensembles de drapage 53a, 53b, venant enserrer les ébauches de rails 51 a, 51b.

Cet agencement particulier, qui peut également être obtenu par un procédé du type « RTM » permet une liaison intime des rails 5, 7 avec le caisson ouvert 45, et donc une excellente résistance de l'ensemble.

Bien entendu, la présente invention n'est nullement limitée aux modes de réalisations décrits et représentés, fournis à titre de simples exemples.

## Revendications

1. Nacelle d'aéronef comportant :
- au moins un panneau de demi-structure interne fixe (17), et
- une structure 12 heures pour inverseur de poussée, comprenant :
- au moins une demi-poutre (1) formée en partie en matériau composite et supportant un demi-capot d'inverseur de poussée,
- une pluralité de chapes (9a à 9d) de charnières pour le montage à rotation de cette demi-poutre (1) sur un mât de support de nacelle,
ladite nacelle étant **caractérisée en ce que** ladite demi-poutre (1) comprend :
- un noyau en mousse (18) enveloppé dans la peau (19) dudit panneau, ou
- un caisson (31) en matériau composite enveloppé dans la peau (19) dudit panneau, ou
- un noyau comportant une partie en mousse (18) et un tube en matériau composite (33), ledit noyau (18, 33) étant enveloppé dans la peau (19) dudit panneau.

2. Nacelle selon la revendication 1, **caractérisée en ce que** ladite poutre (1) comprend en outre au moins un rail (5, 7) pour montage à coulissement dudit demi-capot.

3. Nacelle selon l'une des revendications 1 ou 2, **caractérisée en ce que** lesdites chapes de charnières (9a à 9d) sont formées dans un alliage métallique.

4. Nacelle selon l'une quelconque des revendications 1 à 3, **caractérisée en ce que** ledit tube (33) est formé en carbone forgé.

5. Nacelle selon la revendication 2, **caractérisée en ce que** lesdits rails (5, 7) et lesdites chapes de charnières (9a à 9d) prennent en sandwich ladite peau (19a).

6. Nacelle selon l'une des revendications 4 ou 5, **caractérisée en ce que** lesdites chapes de charnières (9a à 9d) sont formées en carbone forgé.

## Patentansprüche

1. Flugzeugtriebwerksgondel, die Folgendes aufweist:
- mindestens eine stationäre interne Halbstrukturplatte (17), und
- eine "12-Stunden-Struktur" für Schubumkehrsystem, die Folgendes aufweist:
- mindestens einen Halbbalken (1), der zum Teil aus Verbundwerkstoff hergestellt ist und eine halbe Schubumkehrerhaube trägt,
- eine Mehrzahl von Gabeln (9a bis 9d) von Scharnieren für die drehende Montage dieses Halbbalkens (1) auf einen Gondeltragmast,
Gondel **dadurch gekennzeichnet, dass** der Halbbalken (1) Folgendes aufweist:
- einen Schaumstoffkern (18), der von der Haut (19) der Platte umschlossen ist, oder
- einen Kasten (31) aus Verbundwerkstoff, der von der Haut (19) der Platte umschlossen ist, oder
- einen Kern, der einen Teil aus Schaumstoff (18) und ein Rohr aus Verbundwerkstoff (33) aufweist, wobei der Kern (18, 33) von der Haut (19) der Platte umschlossen ist.

2. Gondel nach Anspruch 1, **dadurch gekennzeichnet, dass** der Balken (1) ferner mindestens eine Schiene (5, 7) zur gleitenden Montage der halben Haube aufweist.

3. Gondel nach einem der Ansprüche 1 oder 2, **dadurch gekennzeichnet, dass** die Scharniergabeln (9a bis 9d) aus einer Metalllegierung ausgebildet sind.

4. Gondel nach einem der Ansprüche 1 bis 3, **dadurch gekennzeichnet, dass** das Rohr (33) aus geschmiedetem Karbon gebildet ist.

5. Gondel nach Anspruch 2, **dadurch gekennzeichnet, dass** die Schienen (5, 7) und die Scharniergabeln (9a bis 9d) die Haut (19a) sandwichartig einschließen.

6. Gondel nach einem der Ansprüche 4 oder 5, **dadurch gekennzeichnet, dass** die Scharniergabeln (9a bis 9d) aus geschmiedetem Karbon gebildet sind.

## Claims

1. An aircraft nacelle comprising:
- at least one panel of stationary inner half-structure (17), and
- a 12 hour structure for thrust reverser, comprising:
- at least one half-beam (1) formed in part in composite material and supporting a half-cowl of thrust reverser,
- a plurality of clevises (9a to 9d) of hinges for the mounting in rotation of this half-beam (1) on a nacelle supporting mast,
said nacelle being **characterized in that** said half-beam (1) comprises:
- a foam core (18) enveloped in the skin (19) of said panel , or
- a compartment (31) in composite material enveloped in the skin (19) of said panel, or
- a core comprising a part in foam (18) and a tube in composite material (33), said core (18, 33) being enveloped in the skin (19) of said panel.

2. The nacelle according to claim 1, **characterized in that** said beam (1) further comprises at least one rail (5, 7) for slidably mounting said half-cowl.

3. The nacelle according to any of claims 1 or 2, **characterized in that** said hinge clevises (9a to 9d) are formed in a metal alloy.

4. The nacelle according to any one of claims 1 to 3, **characterized in that** said tube (33) is formed in wrought carbon.

5. The nacelle according to claim 2, **characterized in that** said rails (5, 7) and said hinge clevises (9a to 9d) sandwich said skin (19a) therebetween.

6. The nacelle according to any of claims 4 or 5, **characterized in that** said hinge clevises (9a to 9d) are formed in wrought carbon.
